# EUROPÄISCHE PATENTSCHRIFT

(11) **EP 2 418 624 B1**
(45) Veröffentlichungstag und Bekanntmachung des Hinweises auf die Patenterteilung: **02.01.2019**
(21) Anmeldenummer: 10008439.1
(22) Anmeldetag: 12.08.2010
(51) Int. Cl.: G07C 1/22, A63H 17/385, A63F 13/65, A63F 13/79, A63H 18/00, A63F 13/213, A63F 13/235, A63H 18/12

(54) **Verfahren und Vorrichtung zur Steuerung und/oder Überwachung von Rennfahrzeugen auf einer Rennstrecke**
Device and method for controlling and/or monitoring race vehicles on a race course
Procédé et dispositif de commande et/ou de surveillance de voitures de course sur une piste de course

(43) Veröffentlichungstag der Anmeldung: 15.02.2012
(73) Patentinhaber: Novomatic AG, 2352 Gumpoldskirchen (AT)
(72) Erfinder: Platzer, Peter, 4040 Linz (AT)
(74) Vertreter: Thoma, Michael

(56) Entgegenhaltungen:
- EP-A1- 1 967 241
- EP-A2- 0 949 483
- WO-A2-2006/042235

## Beschreibung

Die vorliegende Erfindung betrifft ein Verfahren und eine Vorrichtung zur Steuerung und/oder Überwachung mehrerer durch Rennteilnehmer gesteuerter Rennfahrzeuge auf einer Rennstrecke, wobei jedes Rennfahrzeug jeweils mit einem Fahrzeugspeicher versehen ist, in dem Fahrzeugdaten gespeichert sind, die von einem der Rennstrecke zugeordneten Empfangs-/Lesegerät ausgelesen und in eine Datenbank gespeichert werden.

Der Rennbetrieb auf Rennstrecken wird üblicherweise unter Zuhilfenahme von technischen Erfassungsmitteln überwacht und mit entsprechenden Steuerungsbausteinen gesteuert, was beispielsweise die Erfassung der gefahrenen Rundenzahl und/oder Rundenzeit oder die Identifizierung eines jeweiligen Fahrzeugs oder eines diesem Fahrzeug zugeordneten Fahrers anbelangt. Neben den an sich schon länger bekannten Überwachungsmaßnahmen wie Lichtschranken zur Erfassung der Geschwindigkeit, Kameraüberwachung zur Erfassung des Zieleinlaufs oder dergleichen ist es in jüngerer Zeit auch bereits vorgeschlagen worden, Fahrzeuge und die diese steuernden Fahrer sowie die Fahrzeugposition auf der Rennstrecke und die gefahrene Zeit oder Strecke per elektronischer Datenübertragung vom Fahrzeug aus zu überwachen bzw. zu steuern. Beispielsweise schlagen es die Schriften WO 2006/042235 A2 und US 2006/0183405 A1 vor, an den Rennfahrzeugen sog. RFID-Elemente, d.h. mit Datenfunk arbeitende Kennungsbausteine, anzubringen und in diesen RFID-Elementen eine Fahrzeugkennung, eine Fahrerkennung und ggf. weitere Fahrzeug- und Fahrerdaten sowie Rennbetriebsdaten abzuspeichern, die dann von geeigneten, an der Rennstrecke befindlichen RFID-Lesegeräten ausgelesen werden, beispielsweise dergestalt, dass bei jeder Zieldurchfahrt das RFID-Element eines Fahrzeugs ausgelesen, der Rundenzähler entsprechend erhöht und zusammen mit den Fahrzeug- und Fahrerkennungen abgespeichert wird. Aus der EP 0 949 483 ist ein Telemetriesystem für Renn-Go-Karts bekannt, bei dem eine Smartcard in einen am Go-Kart installierten Boardrechner einsetzbar ist, wobei mittels der genannten Smartcard das System aktiviert und nach Art einer Prepaid-Telefonkarte die Rundengebühren bezahlt werden.

Derartige Steuerungs- und Überwachungsvorrichtungen werden dabei insbesondere bei Modellrennstrecken, insbesondere sog. Slotcar-Bahnen eingesetzt, können prinzipiell auch auf echten Rennstrecken und den darauf fahrenden Rennfahrzeugen Verwendung finden. Als Rennfahrzeuge kommen hier naturgemäß verschiedene Fahrzeugtypen wie beispielsweise Autos oder Motorräder in Betracht, es können jedoch prinzipiell auch andere Rennobjekte wie beispielsweise Pferde, Trabrennwagen oder Wasserfahrzeuge wie Rennboote mit entsprechenden Vorrichtungen ausgerüstet werden, so dass der Term Rennfahrzeug im Kontext der vorliegenden Anmeldung breit zu verstehen ist.

Derartiger Rennbetrieb mit Rennfahrzeugen unterliegt naturgemäß Manipulationsversuchen, sei es durch die Teilnehmer selbst, die auch unter Zuhilfenahme unfairer Mittel unbedingt gewinnen wollen, oder sei es durch Dritte, die beispielsweise für das Platzieren von Wetten ihre Gewinnchancen erhöhen wollen. Hierbei ist die Verwendung der vorgenannten technischen Erfassungsmittel nicht unbedingt sicherheitserhöhend, da auch derartige, an sich unbestechliche Überwachungsmittel manipuliert werden können. Beispielsweise können die vorgenannten Fahrzeugspeicher, in denen die Fahrzeugkennungen abgelegt sind, beispielsweise dahingehend manipuliert werden, dass sie die entsprechenden Signale an sich zu früh und/oder zu stark aussenden, so dass der Zieldurchgang zu früh erfasst wird. Umgekehrt kann die Aussendung der in den Speicherbausteinen gespeicherten Daten verzögert werden, so dass ein Frühstart verschleiert wird. Ferner ergibt sich eine Manipulationsmöglichkeit auch dahingehend, dass in den Fahrzeugspeichern abgelegte Daten manipuliert werden, beispielsweise dahingehend, dass ein an sich gar nicht fahrender Fahrer als Rennteilnehmer abgelegt ist, um dessen Rundenkonto oder Punktekonto zu verbessern, oder dahingehend, dass in dem Fahrzeugspeicher abgelegte Rennparameter wie Rundenzahl während des Rennens manipuliert werden.

Hiervon ausgehend liegt der vorliegenden Erfindung die Aufgabe zugrunde, ein verbessertes Verfahren und eine verbesserte Vorrichtung der eingangs genannten Art zu schaffen, die Nachteile des Standes der Technik vermeiden und Letzteren in vorteilhafter Weise weiterbilden. Insbesondere sollen Manipulationen des Rennbetriebs und Betrug erschwert und die Sicherheit der Steuerung, Überwachung und Auswertung des Rennbetriebs verbessert werden.

Erfindungsgemäß wird diese Aufgabe durch ein Verfahren nach Anspruch 1 sowie eine Vorrichtung nach Anspruch 14 gelöst. Bevorzugte Ausgestaltungen der Erfindung sind Gegenstand der abhängigen Ansprüche.

Es wird also vorgeschlagen, die für die Steuerung bzw. Überwachung des Rennbetriebs verwendeten Daten auf mehrere Orte aufzuteilen und selektiv in verschiedenen Datenspeichern abzulegen, so dass nur ein zentraler Steuerungs- bzw. Überwachungsrechner, der ggf. aus mehreren, separaten Rechnereinheiten bestehen kann, Zugang zu allen benötigten Daten hat. Insbesondere werden auch die fahrzeug- und fahrerspezifischen Daten aufgesplittet, um die Zuordnung von Fahrer und Fahrzeug überwachen und zentral steuern zu können. Erfindungsgemäß wird jeder Rennteilnehmer mit einem vom Fahrzeugspeicher separaten Teilnehmerspeicher versehen, in dem Teilnehmerdaten, insbesondere Identifikationsdaten wie eine Fahrerkennung abgespeichert sind, die von einem Empfangs-/Lesegerät ausgelesen und in der Datenbank, in der auch die Fahrzeugdaten gespeichert sind, und/oder in einer weiteren Datenbank abgelegt werden, und wobei die in der oder den Datenbank(en) gespeicherten Fahrzeugdaten und Teilnehmerdaten mit Hilfe von Zuordnungsmitteln einander zugeordnet werden und wobei ein erneutes Auslesen von Fahrzeugdaten und Teilnehmerdaten durchgeführt und die Zuordnung der erneut ausgelesenen Fahrzeugdaten mit den erneut ausgelesenen Teilnehmerdaten mit der zuvor von den Zuordnungsmitteln vergebenen Zuordnung abgeglichen wird. Durch die Aufteilung der zu speichernden Daten auf mehrere Speicherplätze und die Verwendung von separaten Speichermitteln an den Fahrzeugen und an den Fahrern bzw. Teilnehmern werden die Manipulationsmöglichkeiten deutlich verringert, insbesondere auch deshalb, weil die Verknüpfung der relevanten Daten, die einerseits die Fahrzeuge betreffen und andererseits die Teilnehmer betreffen, an einem sowohl von den Fahrzeugen als auch von den Teilnehmern separaten Ort von einem zentralen Rechner und diesem zugeordneten Datenbank erfolgt. Zum anderen wird hierdurch die Steuerung der Zuordnung von Fahrer und Fahrzeugen variabel und kann ebenfalls vom Rechnersystem erst kurz vor Beginn des Rennens vorgegeben werden, wodurch Manipulationen an Fahrzeugen und den daran befestigten Fahrzeugspeichern erschwert werden. Insbesondere kann die von den Zuordnungsmitteln generierte Zuordnung auch dazu verwendet werden, eine Startaufstellung vorzugeben. Das erneute Auslesen der Fahrzeugdaten und Teilnehmerdaten und das Überprüfen der Zuordnung der erneut ausgelesenen Daten mit der zuvor von den Zuordnungsmitteln vergebenen Zuordnung erlaubt es festzustellen, ob die generierte Fahrzeug-/Fahrerzuordnung auch eingehalten wurde.

Das Auslesen der in den Fahrzeugspeichern gespeicherten Fahrzeugdaten und der in den Teilnehmerspeichern gespeicherten Teilnehmerdaten kann hierbei aktiv oder passiv erfolgen, je nachdem, welche Art von Speicherelementen an den Fahrzeugen und den Teilnehmern verwendet wird. Beispielsweise können die an den Fahrzeugen und/oder den Teilnehmern vorgesehenen Speicher mit aktiv sendenden Sendeeinheiten versehen sein, so dass in diesem Fall ein passives Empfangsgerät zum Auslesen bzw. Empfangen der Daten ausreichend ist. Alternativ oder zusätzlich können an den Fahrzeugen und/oder den Teilnehmern auch nur passive und auf Anforderung sendende Sendeeinheiten vorgesehen sein, so dass in diesem Fall vorteilhafterweise aktive Lesegeräte zum Auslesen der entsprechenden Daten verwendet werden, die mit entsprechenden Signalen die Speichermittel an den Fahrzeugen und/oder Teilnehmern aktiv abfragen.

Insbesondere können als Fahrzeugspeicher und/oder als Teilnehmerspeicher jeweils RFID-Elemente verwendet werden, wobei vorteilhafterweise in diesem Fall die genannten Empfangs-/Lesegeräte als RFID-Lesegeräte ausgebildet sind. Die Verwendung derartiger RFID-Elemente und entsprechender RFID-Lesegeräte bewirkt vielerlei Vorteile, u.a. ist keine "Sichtverbindung" zwischen Sender und Empfänger notwendig, weiterhin ist eine hohe Auflösung bei der Positionsortung möglich, d.h. das Auslesen der Daten kann in einfacher Weise nur dann erfolgen, wenn sich der RFID-Tag an der richtigen, dafür vorgesehenen Stelle befindet, und ferner ist es möglich, mit geringen Stromverbrauchswerten zu arbeiten.

Alternativ oder zusätzlich zu solchen RFID-Elementen bzw. RFID-Lesegeräten können als Teilnehmerspeicher bzw. Fahrzeugspeicher auch Barcode-Elemente verwendet werden, deren Barcode die jeweilige Information, insbesondere Fahrzeugkennung bzw. Teilnehmerkennung, beinhaltet. Als Lesegeräte werden dann vorteilhafterweise Barcode-Leser verwendet, mit Hilfe derer die Barcode-Elemente gelesen werden können.

Durch die zuvor genannte Verwendung separater Speicherelemente an den Fahrzeugen und den Teilnehmern kann die Zuordnung von Fahrern zu Fahrzeugen kurzfristig vorgegeben und umgestoßen werden, um das Interesse an Manipulationen an einem bestimmten Fahrzeug zu eliminieren. Das Rechnersystem zur Überwachung bzw. Steuerung des Rennbetriebs, das Zugriff auf die zumindest eine Datenbank hat, in der die Fahrzeugdaten und die Teilnehmerdaten an separaten Speicherplätzen abgelegt sind, ordnet einem bestimmten Fahrer ein bestimmtes Fahrzeug zu und zeigt dies auf einer Anzeigetafel oder einem anderen geeigneten Anzeigemittel erst kurz vor Start eines Rennens an. Insbesondere kann der Rechner hierfür einen Zufallsgenerator aufweisen bzw. mit einem solchen verbunden werden, so dass der Zufallsgenerator die Zuordnung der Fahrzeugdaten zu den Teilnehmerdaten automatisch vornimmt, so dass ein bestimmtes Fahrzeug zu einem bestimmten Teilnehmer zufallsgesteuert zugeordnet wird.

In Weiterbildung der Erfindung ist eine Überwachungseinrichtung vorgesehen, die es überwacht, ob die von den Zuordnungsmitteln vorgegebene Zuordnung von Fahrer und Fahrzeug auch eingehalten wird. Vorteilhafterweise ist jedem Rennfahrzeug ein Steuerungsgerät zur Steuerung des Fahrzeugs, beispielsweise zum Lenken und/oder Gas Geben bzw. Beschleunigen und/oder Bremsen, zugeordnet, wobei jedes Steuerungsgerät mit einem Empfangs-/Lesegerät zum Auslesen der Teilnehmerdaten aus den Teilnehmerspeichern versehen oder verbindbar ist. Beispielsweise durch Einstecken oder Auflegen oder in der Nähe Positionieren des Teilnehmerspeichers an dem Steuerungsgerät liest das genannten Empfangs-/Lesegerät automatisch die an dem jeweiligen Teilnehmerspeicher abgelegten Teilnehmerdaten aus und überträgt diese an eine Freischaltvorrichtung. Stellt die Freischaltvorrichtung fest, dass die "richtigen" Teilnehmerdaten ausgelesen bzw. übertragen wurden, d.h. die Teilnehmerdaten, die der Zuordnung zu dem entsprechenden Fahrzeug entsprechen, dann schaltet die genannte Freischaltvorrichtung das Steuerungsgerät und/oder das jeweilige Rennfahrzeug frei. Werden indes Teilnehmerdaten aus einem "falschen" Teilnehmerspeicher an die Freischaltvorrichtung übertragen, wird das Fahrzeug und/oder dessen Steuerungsgerät blockiert.

Die genannte Freischaltvorrichtung kann hierbei in das genannte Steuerungsgerät integriert sein, wobei in diesem Fall der Steuerungsrechner für den Rennbetrieb die entsprechende Zuordnung für die Überprüfung der ausgelesenen Teilnehmerdaten an das Steuerungsgerät überträgt. Alternativ oder zusätzlich kann die Freischaltvorrichtung auch in dem zentralen Steuerungsrechner für den Rennbetrieb integriert sein, wobei in diesem Fall vorteilhafterweise die am Steuerungsgerät des Fahrzeugs ausgelesenen Teilnehmerdaten auf den zentralen Steuerungsrechner übertragen werden, um dort den Abgleich mit der rechnergenerierten Zuordnung vorzunehmen. Der genannte Rechner kann dann je nach Ergebnis des Abgleichs ein Freischaltsignal an das Steuerungsgerät übertragen oder nicht.

In vorteilhafter Weiterbildung der Erfindung ist zusätzlich oder alternativ zu der vorgenannten Fahrerüberwachung eine Überwachungsvorrichtung vorgesehen, die es überwacht, ob ein jeweiliges Rennfahrzeug auf der "richtigen", ihm vom Rechner zugeordneten Fahrspur steht. Vorteilhafterweise kann bei Vorhandensein mehrerer Fahrspuren hierzu jeder Fahrspur ein Empfangs-/Lesegerät zum Auslesen der Fahrzeugdaten aus einem Fahrzeugspeicher zugeordnet sein, wobei das genannte Empfangs-/Lesegerät vorteilhafterweise derart ausgebildet ist, dass von dem jeweiligen Gerät nur die Fahrzeugdaten desjenigen Rennfahrzeugs ausgelesen werden, das sich auf der jeweiligen Fahrspur befindet. Vorteilhafterweise können in die Fahrspuren entsprechende RFID-Lesegeräte integriert sein, beispielsweise unter der Fahrbahnoberfläche angeordnet und/oder im Bereich der Stromabnehmer-Schlitze angeordnet sein.

Vorteilhafterweise erfolgt eine Zuordnung der in der Datenbank gespeicherten Fahrzeugdaten zu den Fahrspuren ebenfalls mittels eines Zufallsgenerators automatisch, wobei die rechnergestützte Zuordnung der Fahrspuren zu den Fahrzeugdaten und/oder zu den Teilnehmerdaten vor Beginn eines Rennens auf dem zuvor schon genannten Anzeigemittel angezeigt wird.

Vorteilhafterweise kann die genannte Überwachungseinrichtung für die Einhaltung der Fahrspuren eine Freischaltvorrichtung umfassen, die das jeweilige Rennfahrzeug und/oder die jeweilige Fahrspur nur dann freischaltet, wenn die von dem an einer Fahrspur befindlichen Lesegerät eingelesenen Fahrzeugdaten der vom Rechner vorgegebenen Zuordnung der Fahrspuren zu den Rennfahrzeugen entspricht. Die genannte Freischaltvorrichtung kann hierbei wiederum in das Steuergerät des jeweiligen Fahrzeugs integriert sein und/oder in dem zentralen Rechner zur Steuerung des Rennbetriebs vorgesehen sein und/oder in die Energieversorgung der jeweiligen Fahrspur geschaltet sein, um den Fahrbetrieb des Fahrzeugs dann zu blockieren, wenn das Fahrzeug auf der falschen Fahrspur steht.

In Weiterbildung der Erfindung können die aus dem Fahrzeugspeicher eines Rennfahrzeugs ausgelesenen Fahrzeugdaten und/oder die aus dem Teilnehmerspeicher eines Teilnehmers ausgelesenen Teilnehmerdaten auch dazu genutzt werden, Betriebsparameter der Rennstrecke einzustellen bzw. zu verändern oder auf das jeweilige Fahrzeug bzw. den jeweiligen Teilnehmer abzustimmen. Vorteilhafterweise kann eine Streckensteuervorrichtung anhand der ausgelesenen Fahrzeugdaten beispielsweise die Energieversorgung der Rennfahrzeuge auf der Rennstrecke einstellen, um die Energieversorgung an das jeweilige Fahrzeug anzupassen, wodurch in einfacher Weise die Verwendung verschiedener Fahrzeugtypen ermöglicht wird. Vorteilhafterweise kann eine Streckensteuervorrichtung den maximalen Strom- oder Spannungspegel an das verwendete Fahrzeug anpassen, indem der die Energieversorgung der Rennfahrzeuge auf der Rennstrecke steuernde Energieregler anhand der erfassten Fahrzeugdaten entsprechend nivelliert wird. Alternativ oder zusätzlich kann auch anhand der aus einem Teilnehmerspeicher ausgelesenen Teilnehmerdaten ein Fahrzeugparameter eines Rennfahrzeugs und/oder ein Streckenparameter der Rennstrecke eingestellt werden, vorteilhafterweise unter Berücksichtigung der vom Rechner vorgenommenen Zuordnung dieser Teilnehmerdaten zu den ausgelesenen Fahrzeugdaten. Vorteilhafterweise kann beispielsweise eine Leistungsbegrenzung am Steuergerät eines Rennfahrzeugs vorgegeben und/oder variiert werden, beispielsweise dergestalt, dass bei Teilnahme eines noch ungeschickten Kindes eine geringere Maximalgeschwindigkeit vorgegeben wird, um zu verhindern, dass die Fahrzeuge aus der Kurve getragen werden. Hierzu kann ein entsprechender Leistungs- und/oder Reglerbaustein im Steuergerät des Fahrzeugs entsprechend angesteuert und/oder ein die Energieversorgung der Rennfahrzeuge auf der Rennstrecke steuernder Energieregler entsprechend eingestellt werden.

In Weiterbildung der Erfindung wird vorteilhafterweise auch eine Überwachung der Rennstrecke durch geeignete Überwachungsmittel beispielsweise in Form einer Kamera in Abhängigkeit der aus den Fahrzeugspeichern ausgelesenen Fahrzeugdaten und/oder in Abhängigkeit der aus den Teilnehmerspeichern ausgelesenen Teilnehmerdaten und/oder der erfolgten Zuordnung dieser Fahrzeug- und Teilnehmerdaten variabel gesteuert, beispielsweise dergestalt, dass der Rechner jeweils die Kamera aktiviert und/oder einsetzt, die den Führenden eines Rennens im Erfassungsbereich hat. Alternativ oder zusätzlich kann in Abhängigkeit der aus den Fahrzeugspeichern ausgelesenen Fahrzeugdaten das Umschalten zwischen verschiedenen Kamerapositionen eingestellt werden, wobei insbesondere ein Setup der an der Rennstrecke vorgesehenen Schaltmittel zum Umschalten der Kamerapositionen in Abhängigkeit der Fahrzeugdaten eingestellt werden kann. Sind beispielsweise induktive Schaltmittel vorgesehen, die die Kameraposition umschalten und/oder eine entsprechende Kamera aktivieren, wenn sich ein Fahrzeug annähert, hat die Ausbildung des Chassis erheblichen Einfluss auf das Schaltverhalten solcher induktiver Schaltmittel. Vorteilhafterweise kann hier in Abhängigkeit der ausgelesenen Fahrzeugdaten die Empfindlichkeit der Schaltmittel an das jeweilige Rennfahrzeug angepasst werden.

In Weiterbildung der Erfindung können anhand der ausgelesenen Fahrzeugdaten und Teilnehmerdaten und deren von den Zuordnungsmitteln vorgegebenen Zuordnung und/oder der durch das erneute Auslesen überprüften Zuordnung das Rennergebnis oder ein anderer Rennbetriebsparameter bestimmt oder Rennauswertungen vorgenommen werden, beispielsweise dahingehend, wer die schnellste Runde gefahren ist, wer die höchste Rundenzahl erzielt hat oder wer eine vorgegebene Rundenzahl zuerst absolviert hat. Hierzu kann beispielsweise vorgesehen sein, an der Start-Ziel-Durchfahrt mittels der genannten Empfangs-/Lesegeräte jedes Mal die Fahrzeugkennung aus dem Fahrzeugspeicher auszulesen, wenn das jeweilige Rennfahrzeug das Ziel überquert. Alternativ kann die Überwachung der Rundenzeiten, Rundenzahlen, Fahrzeuggeschwindigkeit und dergleichen und die Bestimmung des Rennergebnisses jedoch auch in anderer Weise erfolgen, ohne dass hierfür in der genannten Weise die genannten Fahrzeugspeicher jeweils ausgelesen werden. Beispielsweise können die vorgenannten Kameras oder andere, geeignete Überwachungsmittel verwendet werden, um den Rennbetrieb zu überwachen bzw. das Rennergebnis zu bestimmen.

Es wird ferner vorgeschlagen, die Sensorik mit ihren einzelnen Komponenten einschließlich der genannten Empfangs-/Lesegeräte und weiterer Sensoren nicht von oben her in die Fahrbahn einzusetzen oder fest am Unterbau zu montieren, bevor die Fahrbahn aufgebracht wird oder unmittelbar an der Fahrbahn selbst zu befestigen, sondern die Sensorik auf einem Träger vorzumontieren und von der Seite her unter die Fahrbahn in einen dort vorgesehenen Aufnahmeraum einzuführen. Insbesondere ist die zumindest eine Sensoreinheit auf einem Führungselement montiert, das quer zur Fahrbahn vom seitlichen Fahrbahnrand her in einen Aufnahmeraum unter der Fahrbahn einschiebbar ist. Hierbei können Kabel, Leitungen oder dergleichen mit der zumindest einen Sensoreinheit fertig vormontiert werden und zusammen mit dem Führungselement von der Seite her unter die Fahrbahn eingeführt werden, so dass es keiner separaten Kabelverlegung oder gar einem Kabelanschluss erst an der Sensorposition bedarf.

Vorteilhafterweise ist die Sensorik unter der Fahrbahn mit dieser nicht in Kontakt bzw. von der Fahrbahn ein Stück weit beabstandet, so dass keine Vibrationen von der Fahrbahn her in die Sensorik eingeleitet werden.

Insbesondere von Vorteil ist die Vormontage auf einem Führungselement dann, wenn mehrere Sensoreinheiten beispielsweise für mehrere Fahrspuren der Rennstrecke zum Einsatz kommen. In vorteilhafter Weiterbildung der Erfindung können mehrere Sensoreinheiten in einem vorbestimmten Abstand voneinander auf dem Führungselement montiert sein, so dass die jeweilige Sensoreinheit passgenau unter dem bestimmungsgemäßen Fahrbahnabschnitt zu liegen kommt, wenn das Führungselement mit allen vormontierten Sensoreinheiten unter die Fahrbahn geschoben wird. Der vorbestimmte Montageabstand der Sensoreinheiten auf dem Führungselement kann insbesondere einer Teilung der Fahrbahn in Fahrspuren entsprechen, so dass unter jeder Fahrspur die hierfür vorgesehene Sensoreinheit zu liegen kommt. Die Beabstandung der vormontierten Sensoreinheiten kann auch der Beabstandung von in die Fahrbahn eingebrachten Sensorfenstern entsprechen, die vorteilhafterweise neben, insbesondere unmittelbar neben Fahrspurkontakten vorgesehen sein können, mittels welchen Fahrspurkontakten die Rennfahrzeuge mit Energie versorgt werden. Die genannten Sensorfenster können hierbei eine begrenzte Fläche in der Fahrbahn sein, innerhalb derer die Fahrbahn eine erhöhte Durchlässigkeit für die Sensorsignale und/oder zu erfassender Größen besitzt. Insbesondere können die genannten Sensorfenster Sichtfenster bilden, wenn die Sensoreinheit optische Erfassungsmittel umfasst, wie noch erläutert wird.

Um die Sensoreinheiten exakt positionieren zu können und die vorbestimmte Sensorposition leicht zu finden, kann das Führungselement und/oder der genannte Aufnahmeraum unter der Fahrbahn mit Schiebeführungsmitteln versehen sein, die das Führungselement relativ zur Fahrbahn quer zur Einschubrichtung, in der das Führungselement unter die Fahrbahn geschoben wird, seitlich führen und/oder positionieren. In Weiterbildung der Erfindung kann das Führungselement in Form einer Führungsschiene ausgebildet sein, die mit zumindest einer vorspringenden Führungsleiste und/oder mit zumindest einer nutförmigen Führungsausnehmung versehen ist, mit der komplementäre Führungsmittel am Aufnahmeraum in Eingriff bringbar sind. Der genannte Aufnahmeraum kann vorteilhafterweise als Führungsschacht ausgebildet sein, dessen Wandungen zumindest abschnittsweise Führungsflächen bilden, an denen die genannte Führungsschiene passgenau unter die Fahrbahn geleitet wird.

Die genannte Sensoreinheit kann prinzipiell verschieden ausgebildet sein und unterschiedliche Erfassungsmittel aufweisen, je nachdem, welche Aufgaben die Sensorik erfüllen soll. Insbesondere kann nach einer vorteilhaften Weiterbildung der Erfindung vorgesehen sein, dass die Sensoreinheiten jeweils optische Erfassungsmittel aufweisen, die durch in der Fahrbahn vorgesehene Sichtfenster blicken, um das Sichtfenster in der Fahrbahn überfahrende Fahrzeuge auf der Fahrbahn erfassen zu können. Vorteilhafterweise ist das genannte Sichtfenster in der Fahrbahn mit einem lichtdurchlässigen Element verschlossen, beispielsweise einem Glasbaustein oder einem anderen, beispielsweise Kunststoff enthaltenden transparenten Verschlusselement, das die auf die Fahrbahn üblicherweise einwirkenden Kräfte aushält. Prinzipiell könnte das genannte Sichtfenster auch eine unverschlossene oder nur teilweise, beispielsweise vergitterte Fahrbahnausnehmung sein. Vorteilhafterweise ist das Sichtfenster jedoch mit einem lichtdurchlässigen Element vollständig verschlossen, um die darunter liegende Sensorik vor Staub, Schmutz und dergleichen zu schützen.

Das genannte Sichtfenster in der Fahrbahn und die genannte Sensoreinheit sind hinsichtlich ihrer Position derart aufeinander abgestimmt, dass das Sichtfenster in der Erfassungsachse der optischen Erfassungsmittel liegt.

In Weiterbildung der Erfindung besitzt die Sensoreinheit die Erfassungsrichtung begrenzende und in eine vorbestimmte Richtung ausrichtende Richtmittel. Insbesondere kann die Sensoreinheit einen die Erfassungsrichtung bestimmenden, vorzugsweise senkrecht zur Fahrbahnoberfläche ausgerichteten und/oder etwa zylindrischen Signal-Eingangs- und/oder Ausgangskanal, der von der Sensoreinheit zu erfassende Signale nur aus einer bestimmten Richtung zu den Erfassungsmitteln der Sensoreinheit vordringen lässt und/oder von der Sensoreinheit abgegebene Abtastsignale nur in eine vorbestimmte Richtung austreten lässt. Wie ein Gehörgang bzw. ein die Blickrichtung vorgebendes Rohr kann der genannte Signal-Eingangs- und/oder Ausgangskanal die eingehenden oder ausgehenden Sensorsignale exakt ausrichten. Vorteilhafterweise kann der genannte Signalkanal aus einem rohrförmigen Stutzen bestehen, an dessen einem Ende die Erfassungsmittel der Sensoreinheit angeordnet sind und dessen anderes Ende zu dem genannten Sensorfenster in der Fahrbahn hin gerichtet ist.

Die genannten optischen Erfassungsmittel können in Weiterbildung der Erfindung unterschiedlich ausgebildet sein, je nachdem, welche Erfassungsaufgabe zu erfüllen ist. Beispielsweise können die optischen Erfassungsmittel nach Art einer Lichtschranke arbeiten, um die Durchfahrt eines Rennfahrzeugs beispielsweise auf der Ziellinie exakt zu erfassen. Grundsätzlich kann hierbei der optische Sensor unterschiedlich ausgebildet sein. Nach Art eines aktiven Lichtschrankensensors kann vorgesehen sein, dass die Sensoreinheit eine Lichtquelle umfasst, die Licht durch das Lichtfenster in der Fahrbahn nach oben wirft, das nur dann, wenn ein Fahrzeug über das Sichtfenster fährt, vom Fahrzeug, beispielsweise einem daran angebrachten Spiegel am Fahrzeugboden, durch das Sichtfenster in der Fahrbahn zurückgeworfen und von den optischen Erfassungsmitteln erfasst werden. Alternativ kann eine solche optische Sensoreinheit auch nur optische Erfassungsmittel aufweisen. Bei ausreichender Rennstreckenbeleuchtung, insbesondere von oben her beispielsweise durch eine Fahrbahnbeleuchtung, erfasst der optische Sensor unter dem Sichtfenster in der Fahrbahn eine konstante Lichtmenge, solange kein Fahrzeug über das Sichtfenster fährt. Sobald jedoch ein Fahrzeug das Sichtfenster überfährt, wird es sozusagen unter dem Sichtfenster dunkler, so dass ein Signalabfall als Durchgang des Rennfahrzeugs gewertet werden kann.

Alternativ oder zusätzlich kann die Sensoreinheit einen optischen Strichcodeleser umfassen. Hierdurch kann insbesondere nicht nur der Fahrzeugdurchgang erfasst, sondern auch das das Sichtfenster überfahrende Fahrzeug identifiziert werden, wenn der vorzugsweise am Fahrzeugboden angebrachte Strichcode eine Fahrzeugkennung enthält. Je nachdem, welche Information der am Fahrzeug angebrachte Strichcode enthält, können verschiedene Auswertungen über den reinen Fahrzeugdurchgang hinaus durchgeführt werden.

Alternativ oder zusätzlich kann die zumindest eine Sensoreinheit auch ein Empfangs-/Lesegerät anderer Art, insbesondere in Form eines RFID-Lesers, zum Auslesen eines am Fahrzeug angebrachten Fahrzeugspeichers aufweisen wie oben erläutert.

Nach einer vorteilhaften Weiterbildung der Erfindung kann die Sensoreinheit mehrere, vorzugsweise verschiedenartig ausgebildete Erfassungsmittel besitzen, die miteinander zusammenwirken bzw. im Zusammenspiel miteinander genutzt werden. Insbesondere kann eine Sensoreinheit sowohl optische Erfassungsmittel der vorgenannten Art als auch einen RFID-Leser und/oder einen Strichcodeleser aufweisen, um einerseits exakt den Fahrzeugdurchgang bestimmen und andererseits das jeweilige Fahrzeug identifizieren zu können.

In Weiterbildung der Erfindung sind hierbei die einer Fahrspur zugeordneten mehreren Erfassungsmittel gemeinsam auf dem genannten Führungselement montiert, so dass die mehreren Erfassungsmittel gemeinsam in einfacher Weise positioniert, montiert bzw. demontiert werden können. Alternativ hierzu wäre es auch möglich, für die mehreren Erfassungsmittel mehrere Führungselemente vorzusehen, um bei Wartung eines Erfassungsmittels gezielt nur dieses herausnehmen zu können. Bevorzugt ist jedoch die Anordnung aller Erfassungsmittel auf einem gemeinsamen Führungselement, da hierdurch die Positionierung der Erfassungsmittel relativ zueinander präzise vorgegeben ist.

Vorteilhafterweise kann hierbei eine Steuerungseinrichtung vorgesehen sein, die ein zeitliches Empfangs-/Lesefenster für das Empfangs-/Lesegerät vorgibt, und zwar in Abhängigkeit eines Signals der weiteren Erfassungsmittel. Beispielsweise kann das zeitliche Erfassungs- bzw. Lesefenster für den RFID-Leser dann geöffnet bzw. vorgegeben werden, wenn vom optischen Sensor her der Fahrzeugdurchgang gemeldet wird. Hierdurch wird in einfacher Weise verhindert, dass von dem RFID-Lesegerät beispielsweise infolge eines zu großen Erfassungsbereichs die Daten eines Fahrzeugspeichers ausgelesen werden, der an einem auf der Nachbarspur vorbeifahrenden Fahrzeug angebracht ist.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Darstellung der Steuerungs- bzw. Überwachungsvorrichtung für den Rennbetrieb auf einer Rennstrecke nach einer vorteilhaften Ausführung der Erfindung, die das Zusammenwirken des zentralen Rechnersystems mit den Fahrzeugspeichern und Teilnehmerspeichern und der Rennsteuerung zeigt,
- Fig. 2:: eine beispielhaft ausgefüllte Tabelle, die die vom Rechner vorgenommene Zuordnung der Rennteilnehmer zu den Rennfahrzeugen und deren Zuordnung zu den verschiedenen Fahrspuren der Rennstrecke zeigt,
- Fig.3 :: eine schematische Darstellung einer mehrspurigen Rennstrecke, deren Überwachung durch mehrere Kameras und die Anbindung der Steuerungs- und/oder Überwachungsvorrichtung aus Fig. 1,
- Fig. 4a, 4b:: ein Zeitablaufdiagramm mit zwei Zeitachsen, die das Zusammenspiel der Steuerung des Rennbetriebs mit einer Steuerung des Wettbetriebs, der das Bewetten eines Rennens regelt, zeigt,
- Fig. 5:: eine schematische Draufsicht auf eine Fahrspur einer Rennstrecke, die das neben den Fahrspurkontakten der Fahrbahn angeordnete Sensorfenster und die darunter angeordnete, versenkte Sensoreinheit zeigt,
- Fig. 6:: eine Schnittansicht durch die Fahrbahn der Rennstrecke und die darunter liegende Sensoreinheit entlang der Linie A-A in Fig. 5, wobei in der Fahrbahn das Sensorfenster neben den Fahrspurkontakten und von der unter der Fahrbahn liegenden Sensoreinheit die Führungsschiene, die darauf montierte Leiterplatte und die wiederum darauf montierte Sensoreinheit gezeigt sind,
- Fig. 7:: einen Querschnitt durch die Führungsschiene und die darauf befestigte Sensoreinheit aus Fig. 6,
- Fig. 8:: eine schematische, perspektivische Ansicht der Führungsschiene mit der darauf montierten Leiterplatte und den daran befestigten Sensoreinheiten zur Überwachung mehrerer Fahrspuren einer mehrspurigen Rennstrecke, und
- Fig. 9:: einen Querschnitt ähnlich Fig. 2 durch die Führungsschiene nach einer weiteren vorteilhaften Ausführung der Erfindung, bei der die Sensoreinheit mit der zugehörigen Leiterplatte auf der Unterseite der Führungsschiene montiert ist.

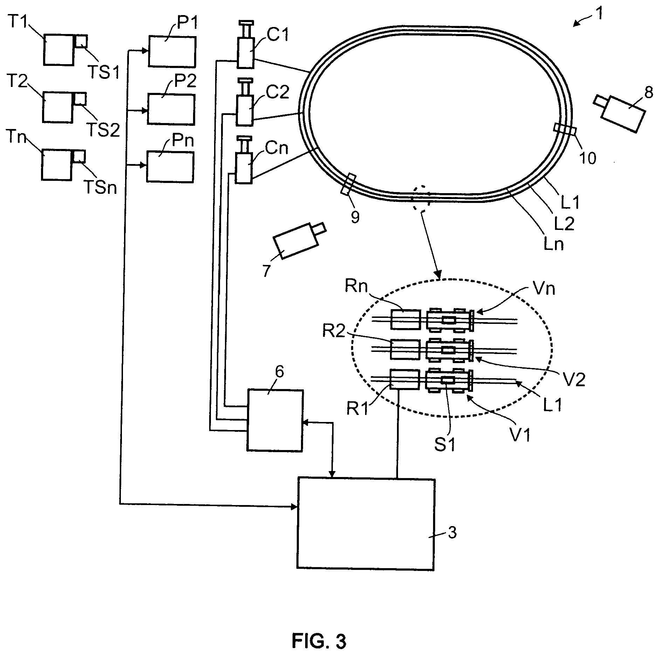

Die in Fig. 3 gezeigte Rennstrecke 1 umfasst mehrere Fahrspuren L1, L2, Ln und kann vorteilhafterweise als sog. Slotcar-Bahn ausgebildet sein, auf der Rennfahrzeuge V1, V2, Vn mit Stromabnehmern in Spuren laufen, welche Spuren in die Fahrbahn der Rennstrecke 1 eingelassen sind. In an sich bekannter Weise sind in die genannten Fahrspuren Stromversorgungsleitungen eingelassen (nicht näher dargestellt), deren Strom- bzw. Spannungsbeaufschlagung über damit verbundene Steuerungsgerät C1, C2, Cn gesteuert werden kann, wobei die Strom- bzw. Spannungsversorgung jeder Fahrspur L1, L2, Ln unabhängig von den übrigen Fahrspuren gesteuert bzw. geregelt werden kann.

Wie Fig. 3 zeigt, sind der Rennstrecke 1 in der gezeichneten Ausführung zwei Kameras 7 und 8 zugeordnet, die verschiedene Abschnitte der Rennstrecke 1 überwachen, um ein jeweiliges Rennen in Form von Fernsehbildern übertragen zu können.

Vorteilhafterweise können für die Rennstrecke 1 mehr Teilnehmer mit Hilfe eines zentralen Rechners 3 registriert werden als die Rennstrecke 1 Fahrspuren hat. Ist beispielsweise eine Rennstrecke mit sechs Fahrspuren vorgesehen, können beispielsweise acht verschiedene Fahrer registriert werden, wobei je Fahrspur jeweils ein spurgeführtes Rennauto gesteuert werden kann, so dass eine Teilmenge der registrierten Teilnehmer in einem Rennen antreten kann. Hierbei kann das Rennen in verschiedenen Ausführungen durchgeführt werden, beispielsweise kann es ein Ziel sein, den jeweils schnellsten Fahrer zu ermitteln, d.h. jenen Fahrer, der als erster ein durch ihn gesteuertes Rennfahrzeug entlang eines definierten Streckenabschnitts der Autorennbahn gesteuert hat. Alternativ oder zusätzlich können die über eine vorbestimmte Zeit erreichten Rundenzahlen das Rennergebnis bestimmen. Je Rennevent können jeweils maximal nur eine bestimmte Anzahl der registrierten Fahrer zum Befahren einer jeweiligen Fahrspur berechtigt sein, während die für ein Rennevent nicht ausgewählten Teilnehmer eine Pause haben können oder die Möglichkeit zur Steuerung des Systems erhalten können oder anderen Aufgaben wie dem Fahrzeugservice und/oder dem Einsetzen der Rennfahrzeuge in die Rennspuren zugeteilt sein können.

Zum einen wird zunächst jedem der Teilnehmer T1, T2, Tn ein Teilnehmerspeicher TS1, TS2, TSn vorzugsweise in Form einer RFID-Karte mit einer jeweiligen Fahrerkennung TID1, TID2, TIDn zugeordnet, wobei vor dem Rennbetrieb ein Registrieren der jeweiligen Teilnehmer erfolgt, indem ein geeignetes Empfangs- und/oder Lesegerät beispielsweise in Form eines RFID-Readers den jeweiligen Teilnehmerspeicher TS1, TS2, TSn ausliest, wobei die jeweils zugehörige Fahrerkennung TID ermittelt und diese in einem ersten Speicherbereich M1 einer zentralen Datenbank 2 gespeichert wird.

Weiterhin werden die Rennfahrzeuge V1, V2, Vn mit einem jeweiligen Fahrzeugspeicher S1, S2, Sn vorzugsweise in Form eines RFID-Elements versehen, denen einen jeweilige Fahrzeugkennung zugeordnet ist. In einem weiteren Schritt erfolgt ebenfalls vor dem Rennbetrieb ein Registrieren der Fahrzeugkennungen, indem mittels eines geeigneten Empfangs- bzw. Lesegeräts die Fahrzeugspeicher S1, S2, Sn ausgelesen werden, wobei die Fahrzeugkennungen ermittelt und auf die genannte Datenbank 2 übermittelt werden, wo sie in einem zweiten Speicherbereich M2 abgelegt werden.

Vorzugsweise können hierbei zwei Sätze von Rennfahrzeugen registriert werden, wobei je Rennen nur einer der Rennfahrzeugsätze zum Einsatz kommt, während der andere Fahrzeugsatz als Ersatz, nach einer bestimmten Anzahl an Rennen oder einer bestimmten Zeit zum Auswechseln herangezogen werden kann, um stets optimal fahrtaugliche Rennfahrzeuge zur Verfügung zu haben und somit kontinuierliche Rennabläufe anbieten zu können.

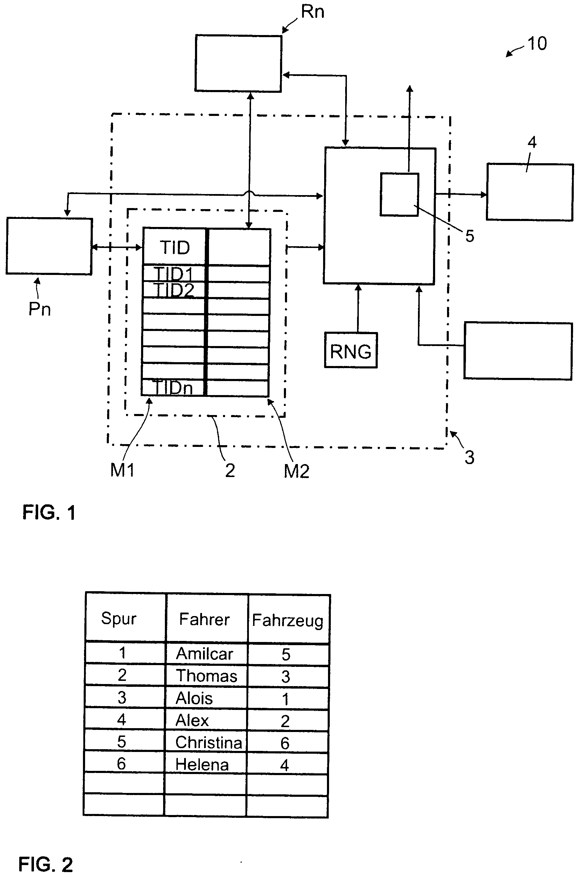

Nach erfolgter Registrierung der Rennfahrzeuge V1, V2, Vn und der Teilnehmer T1, T2, Tn nimmt der zentrale Rechner 3 die Zuordnung der Teilnehmer zu den Rennfahrzeugen vor Rennbeginn automatisch vor und zeigt diese Zuordnung auf einer Anzeige 4 an. Wie Fig. 1 zeigt, kann der Rechner 3 hierzu einen Zufallsgenerator RNG aufweisen, der die Zuordnung der Teilnehmer zu den Rennfahrzeugen zufallsgestützt vornimmt.

Vorteilhafterweise nimmt der Rechner 3 auch automatisch eine Zuordnung der Rennfahrzeuge zu den jeweiligen Fahrspuren vor, wobei vorteilhafterweise auch diese Zuordnung zu den Fahrspuren von dem Zufallsgenerator RNG zufallsgestützt vorgenommen werden kann. Auch diese Zuordnung wird vor Rennbeginn auf der Anzeige 4 angezeigt. Eine solche Anzeige 4 zeigt beispielhaft die Fig. 2, die in der ersten Spalte die Fahrspuren V1, V2, Vn, in der zweiten Spalte die Teilnehmer Amilcar, Thomas, Alois, Alex, Christina und Helena und in der dritten Spalte die zugeordneten Rennfahrzeuge V1, V2, Vn angibt.

Entsprechend der auf der Anzeige 4 vorgegebenen Zuordnung und Auswahl sind sodann die Rennfahrzeuge V1, V2, Vn auf die entsprechenden Fahrspuren L1, L2, Ln der Rennstrecke 1 zu setzen. Das korrekte Aufsetzen der Rennfahrzeuge wird mittels der an den Fahrzeugen vorgesehenen jeweiligen Fahrzeugspeicher überwacht, wobei vorteilhafterweise den jeweiligen Fahrspuren L1, L2, Ln Empfangs-/Lesegeräte R1, R2, Rn zugeordnet sind, beispielsweise diese darin eingelassen oder daran angebracht sind, um den Fahrzeugspeicher S1, S2, Sn des Fahrzeugs auszulesen, das sich auf der jeweiligen Fahrspur befindet. Die genannten Empfangs-/Lesegeräte R1, R2, Rn überprüfen die Fahrzeugkennung und geben diese an eine Freischaltvorrichtung 5 weiter, die im Rechner 3 oder den genannten Steuerungsgeräten C1, C2, Cn angeordnet sein kann. Steht das richtige Fahrzeug auf der richtigen Fahrspur, wird die entsprechende Fahrspur und das entsprechende Fahrzeug freigeschaltet.

Weiterhin werden an den Steuerungsgeräten C1, C2, Cn mittels dort vorgesehener Empfangs-/Lesegeräte P1, P2, Pn die Teilnehmerspeicher TS1, TS2, TSn der das jeweilige Steuerungsgerät C1, C2, Cn handhabenden Teilnehmer ausgelesen. Dies kann beispielsweise dadurch erfolgen, dass der jeweilige Teilnehmer seine RFID-Karte in das entsprechende Steuerungsgerät P1, P2, Pn steckt oder in kontaktlose Kommunikation bringt. Die ausgelesenen Teilnehmerkennungen TID1, TID2, TIDn werden sodann ebenfalls an die genannte Freischaltvorrichtung 5 gesandt, um dort mit der vom Rechner 3 vorgegebenen Zuordnung gemäß der Anzeige 4 nach Fig. 2 verglichen zu werden. Ist der richtige Teilnehmer am richtigen Steuerungsgerät, wird das jeweilige Steuerungsgerät freigeschalten.

Sind alle Teilnehmer an den vorbestimmten Steuerungsgeräten C1, C2, Cn und sind alle Rennfahrzeuge V1, V2, Vn auf den richtigen Fahrspuren, kann der Rechner 3 ein entsprechendes Startsignal generieren, das in geeigneter Weise zur Anzeige gebracht wird, beispielsweise ebenfalls auf der Anzeige 4.

Anhand der an der Rennstrecke 1 aus den Fahrzeugspeichern S1, S2, Sn ausgelesenen Fahrzeugkennungen und der entsprechenden Zuordnung zu den Fahrspuren L1, L2, Ln kann eine Streckensteuervorrichtung 6, die Teil des Rechners 3 sein kann, entsprechende Streckenparameter optimal auf die jeweiligen Rennfahrzeuge V1, V2, Vn abstimmen. Eine solche Systemabstimmung kann beispielsweise eine optimale Spannungsversorgung der jeweiligen Fahrspur L1, L2, Ln für das jeweilige Rennfahrzeug V1, V2, Vn beinhalten, wodurch eine flexiblere Handhabung durch die Verwendung vieler unterschiedlicher Antriebsmotoren für die Rennautos möglich wird.

Ferner kann das Umschalten der genannten Kameras 7, 8 ebenfalls in Abhängigkeit der ausgelesenen Fahrzeugkennungen gesteuert werden. Werden beispielsweise an der Rennstrecke 1 induktive Schaltmittel 9, 10 vorgesehen, die durch Vorbeifahren eines jeweiligen Rennfahrzeugs V1, V2, Vn aktiviert werden und die entsprechende Kamera 7, 8 in Betrieb setzen bzw. das davon bereitgestellte Bild zur Übertragung freigeben, kann die Ansprechschwelle der genannten Schaltmittel 9, 10 von dem Rechner 3 in Abhängigkeit der ausgelesenen Fahrzeugkennungen eingestellt werden.

Vorteilhafterweise kann vor jedem Rennen und/oder nach Abhalten einer vorbestimmten Anzahl von Rennen eine neuerliche Ermittlung der Fahrer-Rennfahrzeug-Fahrspurposition stattfinden, wobei auch aus allen registrierten Teilnehmern gewählt werden kann. Vorteilhafterweise nimmt dies der Rechner 3 automatisch vor. Durch die genannte neuerliche Ermittlung der Teilnehmer, der Rennfahrzeuge und der Fahrspuren und deren Zuordnung zueinander erhöht sich die Sicherheit gegen Manipulationen oder Absprachen.

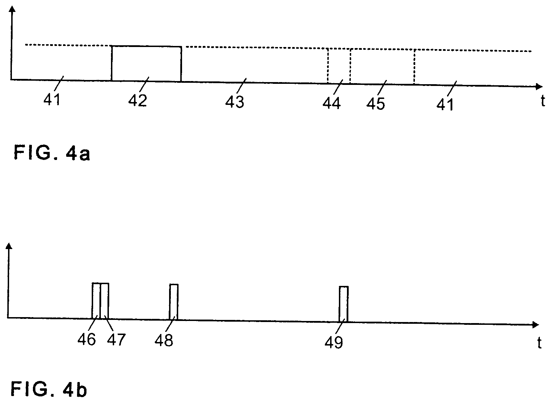

Wie Fig. 4a und 4b zeigen, kann das Steuerungs- und Überwachungssystem für den Rennbetrieb auch dazu genutzt werden, eine (nicht näher dargestellte) Übertragungs- und/oder Wettbetriebs-Steuervorrichtung anzusteuern, die das Platzieren von Wetten auf ein Rennevent steuert und die erzielten Gewinne anzeigt. Wie der Vergleich der beiden Zeitschienen der Fig. 4 zeigt, wird zunächst wie in der Figur 4a gezeigt in einer Wartephase 41 vor einem Rennen mit Hilfe des Rechners 3 auf ein RaceSetupEvent 46 hin die genannte Auswahl und Zuordnung der Teilnehmer, der Rennfahrzeuge und der Fahrspuren vorgenommen und als "Race Setup" auf der Anzeige 4 angezeigt, wobei auf ein QuoteCalculationEvent 47 hin auch eine Bestimmung und Anzeige der Wettquoten vorgenommen werden kann. Sodann wird von der genannten Wettbetriebs-Steuervorrichtung ein Wettzeitfenster 42 zur Annahme von Wetten an beispielsweise einem Wett-Terminal geöffnet, welches kurz bzw. unmittelbar vor Beginn des entsprechenden Rennens wieder geschlossen wird. Ist das genannte Wettzeitfenster von der Vorrichtung automatisch geschlossen worden, wird das Startsignal 48 für das Rennen gegeben und mittels der Kameras 7 und 8 das Rennevent während eines Live-Event-Zeitfensters 43 beispielsweise über eine Satellitenverbindung übertragen und auf dem Wett-Terminal angezeigt. Nach Rennende kann beispielsweise der Rennausgang, d.h. insbesondere der Zieleinlauf, während eines Finish-Zeitfensters 44 nochmals in Zeitlupe übertragen werden. Die genannte Wettbetriebs-Steuervorrichtung gibt anschließend auf ein ConfirmationEvent 49 hin das Ergebnis bekannt und zeigt die Gewinne als Win-Animation 45 an.

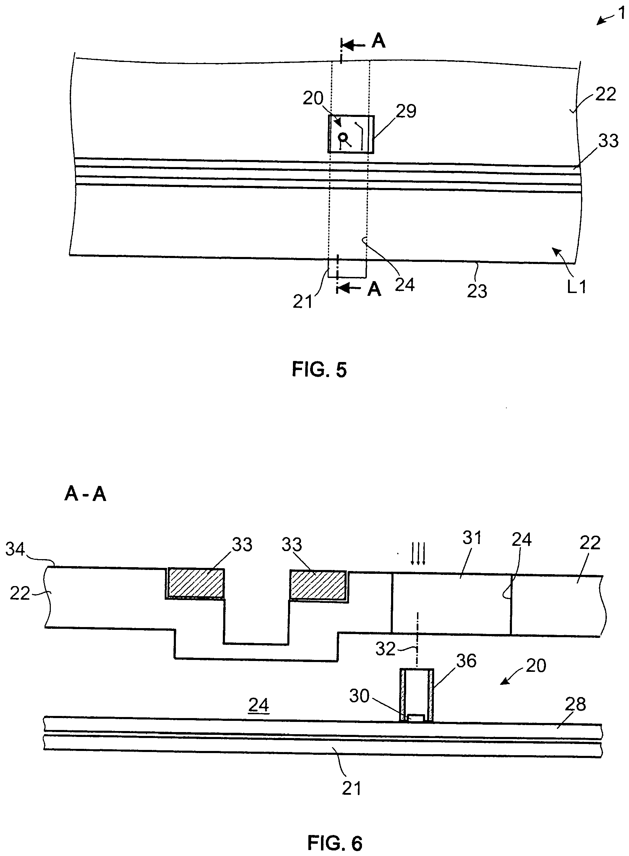

Der in Fig. 5 dargestellte Ausschnitt einer Rennstrecke 1 zeigt die Fahrbahn 22 einer Fahrspur L1 einer Slotcar-Bahn, in der die an sich bekannten Fahrspurkontakte 33 eingelassen sind, um darauf fahrende Rennfahrzeuge mit Strom zu versorgen. Obwohl nur eine Fahrspur L1 dargestellt ist, versteht es sich, dass die Rennstrecke 1 mehrere nebeneinander angeordnete Fahrspuren aufweisen kann.

Wie Fig. 5 zeigt, ist in dem Unterbau unter der Fahrbahn 22 ein sich quer zu der genannten Fahrbahn 22 erstreckender Aufnahmeraum 24 in Form eines Aufnahmeschachts vorgesehen, in den die Sensorik zur Überwachung der auf der Fahrbahn 22 fahrenden Rennfahrzeuge einschiebbar ist.

Wie die weiteren Figuren 6-8 zeigen, ist hierbei als Träger für die Sensorik ein längliches Führungselement 21 vorgesehen, das in der gezeichneten Ausführungsform als Führungsschiene in Form eines Strangprofils ausgebildet ist. Die genannte Führungsschiene besitzt in der gezeichneten Ausführung einen treppen- bzw. podestförmigen Querschnitt und umfasst seitlich vorspringende Führungsleisten 26, die als Schiebeführungsmittel 25 dienen, um beim Einschieben des Führungselements 21 in den Aufnahmeraum 24 die Führungsschiene exakt zu positionieren. Der genannte Aufnahmeraum 24 ist im Querschnitt an das Profil des Führungselements 21 angepasst bzw. mit angepassten Schiebeführungsmitteln versehen, so dass zusammenwirkende Führungsflächen bzw. -elemente in Eingriff geraten und die Führungsschiene quer zu ihrer Längsrichtung exakt positionieren.

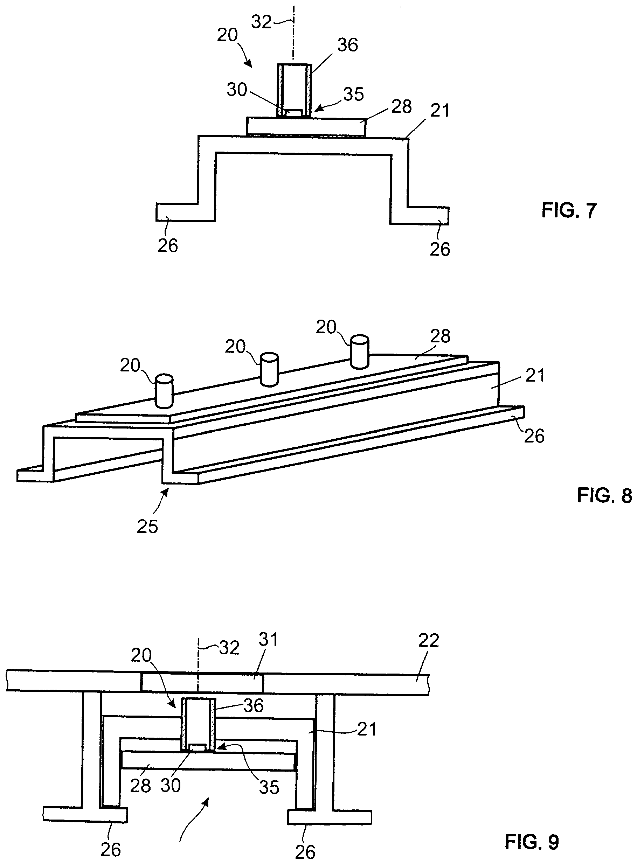

In dem vorliegenden Ausführungsbeispiel ist auf dem genannten Führungselement 21 eine Leiterplatte 28 befestigt, die mit ihrer Rückseite auf der Oberseite des genannten Schienenprofils aufliegt, vgl. Figuren 7 und 8.

Alternativ zur Ausführung nach den Figuren 7 und 8 kann in vorteilhafter Weiterbildung der Erfindung die Leiterplatte 28 mit der daran befestigten Sensorik auch von unten her an dem genannten Schienenprofil montiert sein, so dass die Elektronik besser geschützt ist. Wie Fig. 9 zeigt, kann insbesondere die genannte Leiterplatte zwischen den Schenkeln des U-förmigen Schienenprofils aufgenommen sein, so dass die Leiterplatte 28 mit ihrer Oberseite sozusagen die Unterseite des Mittelabschnitts der Führungsschiene anblickt.

Die besagte Leiterplatte 28 trägt wiederum mehrere Sensoreinheiten 20, die in Längsrichtung der Schiene voneinander beabstandet angeordnet sind. Die Beabstandung der Sensoreinheiten 20 voneinander entspricht hierbei vorteilhafterweise der Beabstandung der Fahrspuren bzw. der Beabstandung der Fahrspurkontakte 33 verschiedener Fahrspuren der Rennstrecke 1, so dass die Sensoreinheiten 20 passgenau neben den genannten Fahrspurkontakten 33 unter der Fahrbahn 22 positioniert werden können, wie dies Fig. 6 zeigt.

Die Leiterplatte 28 kann dabei durchgehend einteilig oder auch mehrteilig ausgebildet sein.

In der gezeichneten Ausführung umfassen die Sensoreinheiten 20 jeweils optische Erfassungsmittel 30 in Form eines Fotosensors, der unmittelbar auf der genannten Leiterplatte 28 aufgebracht ist und an deren Leiterbahnen angeschlossen ist.

Der genannte Fotosensor kann als Fotowiderstand oder als Fotodiode oder als Fototransistor, der unter Ausnutzung des Inneren fotoelektrischen Effektes arbeitet, oder als Fotozelle beziehungsweise Photomultiplier oder als pyroelektrischer Sensor, der unter Ausnutzung von Ladungsverschiebungen aufgrund der Temperaturänderung bei Lichtabsorption arbeitet, ausgebildet sein.

Wie Fig. 6 und Fig. 7 zeigen, ist über den genannten Fotosensor hierbei ein Lichtkanal 36 gestülpt, der sozusagen den Sichtbereich des Fotosensors begrenzt und vorgibt und die Erfassungsachse 32 des Fotosensors bestimmt. Der genannte Lichtkanal 36 erstreckt sich senkrecht zur Ebene der Leiterplatte 28 und im montierten Zustand senkrecht zur Fahrbahnoberfläche 34. Bei der Ausführung nach Fig. 9 ist der genannte Lichtkanal 36 durch eine entsprechende Ausnehmung in dem Führungselement 21 hindurchgeführt, da dort, wie erläutert, die Leiterplatte 28 auf der Unterseite des Schienenprofils montiert ist. Insbesondere kann die genannte Ausnehmung in dem Führungselement 21 passgenau an die Außenkontur des Lichtkanals 36 angepasst sein, wodurch der genannte Lichtkanal 36 an dem Führungselement 21 geführt bzw. gehalten ist, so dass die Befestigung der Sensorik an dem Führungselement 21 verbessert ist. Gegebenenfalls kann hier auch eine kraft- oder stoffschlüssige Verbindung beispielsweise durch Verkleben zur weiteren Verbesserung der Befestigung des Lichtkanals 36 vorgesehen sein. Ein derart an dem Führungselement 21 befestigter Lichtkanal 36 dient gleichzeitig als Schutz für den Fotosensor.

In die Fahrbahn 22 sind neben den Fahrspurkontakten 33 Sensorfenster 29 eingebracht, die durch lichtdurchlässige Elemente 31 verschlossen sind, vgl. Fig. 6. Die genannten Sensoreinheiten 20 sind unter der Fahrbahn 22 so angeordnet, dass die Erfassungsachse 32 der Sensoreinheiten 20 durch die genannten Sensorfenster 29 hindurchgeht.

Die vormontierte Einheit umfassend das gemeinsame Führungselement 21 und die darauf montierten Sensoreinheiten 20 können vom Fahrbahnrand 23 her quer zur Fahrbahn 22 unter diese eingeschoben werden, wobei die Sensoreinheiten 20 passgenau unter der Fahrbahn 22 im Bereich der Sensorfenster 29 zu liegen kommen, wie dies Fig. 6 zeigt.

Der Strichcodeleser 35 kann als CCD-Scanner ausgebildet sein, mit dem ein flacher Zeilenausschnitt des Barcode in seiner gesamten Breite auf einmal erfasst werden kann. Hierzu wird der Code durch Leuchtdioden angeleuchtet. Der Barcode reflektiert je nach Helligkeit oder Dunkelheit auf eine CCD-oder Fotodiodenzeile. Ein Dekoder entziffert hieraus die Striche und Lücken des Barcodes und somit die darin enthaltene Information.

Der Strichcodeleser 35 kann als Laserscanner ausgebildet sein, wobei ein oder mehrere Laserstrahlen auf den Barcode gerichtet und über einen Schwingspiegel, ein Spiegelrad oder andere optischen Systeme linienförmig in hoher Geschwindigkeit über den Barcode geführt werden kann. Das vom Barcode durch die hellen und dunklen Striche stärker oder schwächer reflektierte Licht wird dann von einer Optik erfasst und mittels Photodiode in elektrische Signale umgewandelt und ausgewertet.

Alternativ oder zusätzlich können vorzugsweise auf der Leiterplatte 28 auch sog. RFID-Lesegeräte oder Strichcode-Lesegeräte montiert sein, um einen an den Fahrzeugen befestigten RFID-Chip bzw. Strichcode auslesen zu können, wenn die Fahrzeuge über das Sensorfenster 29 fahren. Vorteilhafterweise kann hierbei der Auslesevorgang dann ausgelöst werden, wenn mit den optischen Erfassungsmitteln 30 die Überfahrt eines Fahrzeugs erfasst wird. Alternativ oder zusätzlich können auf der genannten Leiterplatte 28 auch noch weitere Sensoren wie beispielsweise induktive Sensoren angebracht sein, um die Annäherung oder die Entfernung der Fahrzeuge erfassen zu können. Derartige weitere Sensoren können insbesondere in Fahrtrichtung betrachtet vor und/oder hinter den genannten optischen Erfassungsmitteln 30 positioniert sein.

## Patentansprüche

1. Verfahren zur Steuerung und/oder Überwachung mehrerer durch Rennteilnehmer (T1, T2, Tn) gesteuerter Rennfahrzeuge (V1, V2, Vn) auf einer Rennstrecke, wobei jedes Rennfahrzeug (V1, V2, Vn) jeweils mit einem Fahrzeugspeicher (S1, S2, Sn) versehen wird, in dem Fahrzeugdaten gespeichert werden, welche Fahrzeugdaten von einem der Rennstrecke (1) zugeordneten Empfangs-/Lesegerät (R1, R2, Rn) ausgelesen und in eine Datenbank (2) gespeichert werden, wobei jeder Rennteilnehmer mit einem vom Fahrzeugspeicher (S1, S2, Sn) separaten Teilnehmerspeicher (TS1, TS2, TSn) versehen wird, in dem Teilnehmerdaten abgespeichert sind, wobei die Teilnehmerdaten von dem genannten oder einem weiteren Empfangs-/Lesegerät (P1, P2, Pn) ausgelesen und in der und/oder einer weiteren Datenbank (2) abgelegt werden, und wobei die in der oder den Datenbanken) gespeicherten Fahrzeugdaten und Teilnehmerdaten mit Hilfe von Zuordnungsmitteln (3) einander zugeordnet werden und wobei ein erneutes Auslesen von Fahrzeugdaten und Teilnehmerdaten durchgeführt wird und ein Überprüfen der Übereinstimmung der Zuordnung der erneut ausgelesenen Daten mit der zuvor von den Zuordnungsmitteln (3) vergebenen Zuordnung von Fahrzeug- und Teilnehmerdaten stattfindet, wobei jedem Rennfahrzeug (V1, V2, Vn) ein Steuerungsgerät (C1, C2, Cn) zur Steuerung des Fahrzeugs zugeordnet ist und **dadurch gekennzeichnet, dass** jedes Steuerungsgerät (C1, C2, Cn) mit einem Empfangs-/Lesegerät (P1, P2, Pn) zum Auslesen der Teilnehmerdaten aus den Teilnehmerspeichern (TS1, TS2, TSn) versehen oder verbindbar ist, wobei von dem jeweiligen Empfangs-/Lesegerät (P1, P2, Pn) die Teilnehmerdaten nur des Teilnehmerspeichers (TS1, TS2, TSn) des an dem Steuerungsgerät (C1, C2, Cn) befindlichen Teilnehmers ausgelesen werden und von einer Freischaltvorrichtung (5) das Steuerungsgerät (C1, C2, Cn) und/oder das jeweilige Rennfahrzeug (V1, V2, Vn) nur dann freigeschalten wird, wenn die an dem jeweiligen Steuerungsgerät (C1, C2, Cn) eingelesenen Teilnehmerdaten der von den Zuordnungsmitteln (3) bestimmten Zuordnung der Fahrzeugdaten und der Teilnehmerdaten entspricht.

2. Verfahren nach dem vorhergehenden Anspruch, wobei als Fahrzeugspeicher (S1, S2, Sn) und/oder als Teilnehmerspeicher (TS1, TS2, TSn) jeweils RFID-Elemente verwendet werden und als Empfangs-/Lesegerät (R1, R2, Rn; P1, P2, Pn) ein RFID-Lesegerät verwendet wird.

3. Verfahren nach Anspruch 1, wobei als Fahrzeugspeicher (S1, S2, Sn) und/oder als Teilnehmerspeicher (TS1, TS2, TSn) jeweils Barcode-Elemente verwendet werden und als Empfangs-/Lesegerät (R1, R2, Rn; P1, P2, Pn) ein Barcode-Lesegerät verwendet wird.

4. Verfahren nach einem der vorhergehenden Ansprüche, wobei die Zuordnung der Fahrzeugdaten zu den Teilnehmerdaten mittels eines Zufallsgenerators (RNG) automatisch vorgenommen wird und die Zuordnung der Fahrzeugdaten zu den Teilnehmerdaten vor Beginn eines Rennens auf einer Anzeige (4) angezeigt wird.

5. Verfahren nach einem der vorhergehenden Ansprüche, wobei bei Vorhandensein mehrerer Fahrspuren (L1, L2, Ln) jede Fahrspur mit einem Empfangs-/Lesegerät (R1, R2, Rn) zum Einlesen der Fahrzeugdaten aus einem Fahrzeugspeicher (S1, S2, Sn) versehen ist, wobei von dem jeweiligen Empfangs-/Lesegerät (R1, R2, Rn) die Fahrzeugdaten nur des Rennfahrzeugs (V1, V2, Vn), das sich auf der jeweiligen Fahrspur (L1, L2, Ln) befindet, ausgelesen werden.

6. Verfahren nach dem vorhergehenden Anspruch, wobei eine Zuordnung der in der Datenbank (2) gespeicherten Fahrzeugdaten zu den Fahrspuren (L1, L2, Ln) mittels eines Zufallsgenerators automatisch vorgenommen wird und die Zuordnung der Fahrspuren (L1, L2, Ln) zu den Fahrzeugdaten und/oder zu den Teilnehmerdaten vor Beginn eines Rennens auf dem Anzeigemittel (4) angezeigt wird.

7. Verfahren nach dem vorhergehenden Anspruch, wobei von der oder einer weiteren Freischaltvorrichtung (5) das jeweilige Rennfahrzeug (V1, V2, Vn) und/oder die jeweilige Fahrspur (L1, L2, Ln) nur dann freigeschalten wird, wenn die von dem an einer Fahrspur (L1, L2, Ln) befindlichen Lesegerät (R1, R2, Rn) eingelesenen Fahrzeugdaten der von Zuordnungsmitteln (3) vorgegebenen Zuordnung der Fahrspuren (L1, L2, Ln) zu den Rennfahrzeugen (V1, V2, Vn) entspricht.

8. Verfahren nach einem der vorhergehenden Ansprüche, wobei von einer Streckensteuervorrichtung (6) zumindest ein Betriebsparameter der Rennstrecke (1) anhand der aus dem Fahrzeugspeicher (S1, S2, Sn) eines Rennfahrzeugs (V1, V2, Vn) ausgelesenen Fahrzeugdaten eingestellt wird, wobei vorzugsweise ein die Energieversorgung der Rennfahrzeuge (V1, V2, Vn) auf der Rennstrecke (1) steuernder Energieregler anhand der erfassten Fahrzeugdaten eingestellt wird.

9. Verfahren nach einem der vorhergehenden Ansprüche, wobei zumindest ein Fahrzeugparameter eines Rennfahrzeugs (V1, V2, Vn) und/oder ein Streckenparameter der Rennstrecke (1) anhand der aus einem Teilnehmerspeicher (TS1, TS2, TSn) ausgelesenen Teilnehmerdaten und der von den Zuordnungsmitteln (3) vorgenommenen Zuordnung dieser Teilnehmerdaten zu den von den Fahrzeugspeichern (S1, S2, Sn) ausgelesenen Fahrzeugdaten eingestellt wird, wobei insbesondere ein die Energieversorgung der Rennfahrzeuge (V1, V2, Vn) auf der Rennstrecke (1) steuernder Energieregler anhand der genannten Teilnehmerdaten und deren Zuordnung eingestellt und/oder ein die Leistungsabgabe des Rennfahrzeugs (V1, V2, Vn) steuernder Leistungsregler anhand der ausgelesenen Teilnehmerdaten und deren Zuordnung eingestellt wird.

10. Verfahren nach einem der vorhergehenden Ansprüche, wobei Erfassungsmittel an der Rennstrecke (1) zur Erfassung und/oder Überwachung der Rennfahrzeuge (V1, V2, Vn) in Abhängigkeit der aus den Fahrzeugspeichern (S1, S2, Sn) ausgelesenen Fahrzeugdaten automatisch konfiguriert, insbesondere in ihrem Ansprechverhalten eingestellt und auf die jeweiligen Rennfahrzeuge (V1, V2, Vn) abgestimmt werden.

11. Verfahren nach einem der vorhergehenden Ansprüche, wobei eine Überwachung der Rennstrecke (1) durch zumindest eine Kamera (K1, K2, Kn) in Abhängigkeit der aus den Fahrzeugspeichern (S1, S2, Sn) ausgelesenen Fahrzeugdaten und/oder der erfolgten Zuordnung der genannten Fahrzeugdaten zu den aus den Teilnehmerspeichern (TS1, TS2, TSn) ausgelesenen Teilnehmerdaten gesteuert wird.

12. Verfahren nach dem vorhergehenden Anspruch, wobei die Rennstrecke (1) durch mehrere Kameras (K1, K2, Kn) überwacht wird, wobei ein Umschalten, insbesondere die Umschaltzeitpunkte, zwischen den verschiedenen Kameras (K1, K2, Kn) in Abhängigkeit der aus den Fahrzeugspeichern (S1, S2, Sn) ausgelesenen Fahrzeugdaten gesteuert wird.

13. Verfahren nach einem der vorhergehenden Ansprüche, wobei ein Rennstartsignal zur Anzeige des Rennbeginns automatisch von einer Startvorrichtung dann erzeugt wird, wenn anhand eines Abgleichs der aus den Fahrzeugspeichern (S1, S2, Sn) ausgelesenen Fahrzeugdaten und der aus den Teilnehmerspeichern (TS1, TS2, TSn) ausgelesenen Teilnehmerdaten mit der vom Rechner (3) generierten Zuordnung der Fahrzeugdaten zu den Teilnehmerdaten und/oder der Zuordnung der Fahrzeugdaten zu den Fahrspuren (L1, L2, Ln) der Rennstrecke (1) festgestellt wurde, dass die tatsächliche Positionierung der Teilnehmerspeicher (TS1, TS2, TSn) an den Steuerungsgeräten (C1, C2, Cn) der Rennfahrzeuge (V1, V2, Vn) und/oder die tatsächliche Aufstellung der Rennfahrzeuge (V1, V2, Vn) auf den Fahrspuren (L1, L2, Ln) der jeweiligen rechnergenerierten Zuordnung entspricht.

14. Vorrichtung zur Steuerung und/oder Überwachung mehrerer durch Rennteilnehmer (T1, T2, Tn) gesteuerter Rennfahrzeuge (V1, V2, Vn) auf einer Rennstrecke (1), mit den Rennfahrzeugen (V1, V2, Vn) jeweils zugeordneten Fahrzeugspeichern (S1, S2, Sn), in denen Fahrzeugdaten abgespeichert sind, und mit zumindest einem der Rennstrecke zugeordnetem Lesegerät (R1, R2, Rn) zum Auslesen der in den Fahrzeugspeichern (S1, S2, Sn) gespeicherten Fahrzeugdaten an der Rennstrecke (1), und mit einer Datenbank (2) zum Speichern der von dem Lesegerät (R1, R2, Rn) ausgelesenen Fahrzeugdaten, wobei von den Fahrzeugspeichern (S1, S2, Sn) separate Teilnehmerspeicher (TS1, TS2, TSn) den Rennteilnehmern (T1, T2, Tn) zugeordnet sind, in welchen Teilnehmerspeichern (TS1, TS2, TSn) Teilnehmerdaten gespeichert sind, die von dem genannten oder einem weiteren Lesegerät (P1, P2, Pn) auslesbar und in der und/oder einer weiteren Datenbank (2) ablegbar sind, wobei Zuordnungsmittel zum Zuordnen der in der oder den Datenbank(en) gespeicherten Fahrzeugdaten und Teilnehmerdaten vorgesehen sind und wobei Überprüfungsmittel zum Überprüfen der Übereinstimmung der Zuordnung der erneut ausgelesenen Daten mit der zuvor von den Zuordnungsmitteln (3) vergebenen Zuordnung von Fahrzeug- und Teilnehmerdaten vorgesehen sind, wobei jedem Rennfahrzeug (V1, V2, Vn) ein Steuerungsgerät (C1, C2, Cn) zur Steuerung des Fahrzeugs zugeordnet ist und **dadurch gekennzeichnet, dass** die Vorrichtung eine Freischaltvorrichtung (5) umfasst und dass jedes Steuerungsgerät (C1, C2, Cn) mit einem Empfangs-/Lesegerät (P1, P2, Pn) zum Auslesen der Teilnehmerdaten aus den Teilnehmerspeichern (TS1, TS2, TSn) versehen oder verbindbar ist, wobei von dem jeweiligen Empfangs-/Lesegerät (P1, P2, Pn) die Teilnehmerdaten nur des Teilnehmerspeichers (TS1, TS2, TSn) des an dem Steuerungsgerät (C1, C2, Cn) befindlichen Teilnehmers ausgelesen werden und von der Freischaltvorrichtung (5) das Steuerungsgerät (C1, C2, Cn) und/oder das jeweilige Rennfahrzeug (V1, V2, Vn) nur dann freigeschalten wird, wenn die an dem jeweiligen Steuerungsgerät (C1, C2, Cn) eingelesenen Teilnehmerdaten der von den Zuordnungsmitteln (3) bestimmten Zuordnung der Fahrzeugdaten und der Teilnehmerdaten entspricht.

15. Vorrichtung nach dem vorhergehenden Anspruch, wobei zumindest eine unter der Fahrbahnoberfläche versenkt angeordnete Sensoreinheit (20) vorgesehen ist, die auf einem Führungselement (21) montiert ist, das quer zur Fahrbahn (22) vom seitlichen Fahrbahnrand (23) her in einen Aufnahmeraum (24) unter der Fahrbahn (22) einschiebbar ist, wobei vorzugsweise das Führungselement (21) und/oder der Aufnahmeraum (24) Schiebeführungsmittel (25) zur seitlichen Führung und/oder Positionierung quer zur Einschubrichtung des Führungselements (21) in den Aufnahmeraum (24) aufweist.

16. Vorrichtung nach dem vorhergehenden Anspruch, wobei mehrere Sensoreinheiten (20) in einem vorbestimmten Abstand voneinander auf dem Führungselement (21) montiert sind, wobei der genannte Abstand der Sensoreinheiten (20) der Teilung der Fahrbahn (22) in Fahrspuren (L1, L2, Ln) und/oder dem Abstand von in der Fahrbahn (22) vorgesehenen Sensorfenstern (29) entspricht, wobei vorzugsweise die mehreren Sensoreinheiten (20) auf einer gemeinsamen Leiterplatte, die zumindest einen Teil des Führungselements bildet und/oder an dem Führungselement (21) starr befestigt ist, montiert ist.

## Claims

1. Method for controlling and/or monitoring multiple racing vehicles (V1, V2, Vn) controlled by race participants (T1, T2, Tn) on a racetrack, wherein each racing vehicle (V1, V2, Vn) is respectively provided with a vehicle memory (S1, S2, Sn), in which vehicle data is stored, which vehicle data is read-out by a receiver/reader (R1, R2, Rn) assigned to the racetrack (1) and stored in a database (2), wherein each race participant is provided with a participant memory (TS1, TS2, TSn) separate from a vehicle memory (S1, S2, Sn), in which participant data is stored, wherein the participant data is read-out by the said or another receiver/reader (P1, P2, Pn) and stored in the said and/or a further database (2), and wherein the vehicle data and participant data stored in the database(s) are assigned to one another using assignment means (3), and wherein an anew read-out of vehicle data and participant data is carried out and a verification is made as to whether the assignment of the anew read-out data matches the assignment of vehicle- and participant data previously set by the assignment means (3), wherein each racing vehicle (V1, V2, Vn) is assigned a controller (C1, C2, Cn) for controlling the vehicle, and **characterized in that** each controller (C1, C2, Cn) is provided with or connectable with a receiver/reader (P1, P2, Pn) for reading-out the participant data from the participant memories (TS1, TS2, TSn), wherein the participant data of only the participant memory (TS1, TS2, TSn) of the participant situated at the controller (C1, C2, Cn) are read-out by the respective receiver/reader (P1, P2, Pn), and the controller (C1, C2, Cn) and/or the respective racing vehicle (V1, V2, Vn) is only activated by an activation device (5) in the event that the participant data read-in on the respective controller (C1, C2, Cn) match the assignment of vehicle data and participant data determined by the assignment means (3).

2. Method according to the preceding claim, wherein RFID elements are respectively used as vehicle memory (S1, S2, Sn) and/or participant memory (TS1, TS2, TSn), and an RFID reader is used as a receiver/reader (R1, R2, Rn; P1, P2, Pn).

3. Method according to claim 1, wherein barcode elements are respectively used as vehicle memory (S1, S2, Sn) and/or participant memory (TS1, TS2, TSn), and a barcode reader is used as a receiver/reader (R1, R2, Rn; P1; P2, Pn).

4. Method according to any of the preceding claims, wherein the assignment of the vehicle data to the participant data is effected automatically by means of a random number generator (RNG), and the assignment of the vehicle data to the participant data is displayed on a display (4) before the beginning of a race.

5. Method according to any of the preceding claims, wherein if multiple lanes (L1, L2, Ln) are present, is lane is provided with a receiver/reader (R1, R2, Rn) for reading-in the vehicle data from a vehicle memory (S1, S2, Sn), wherein the vehicle data of only the racing vehicle (V1, V2, Vn) situated at the respective lane (L1, L2, Ln) is read-out by the respective receiver/reader (R1, R2m Rn).

6. Method according to the preceding claim, wherein an assignment of the vehicle data to the lanes (L1, L2, Ln) stored in the database (2) is effected automatically by means a random number generator, and the assignment of the lanes (L1, L2, Ln) to the vehicle data and/or the participant data is displayed on the display (4) before the beginning of a race.

7. Method according to the preceding claim, wherein the respective racing vehicle (V1, V2, Vn) and/or the respective lane (L1, L2, Ln) is activated by the said or a further activation device (5) only in the case that the vehicle data read-in by the reader (R1, R2, Rn) situated on a lane (L1, L2, Ln) matches the assignment of the lanes (L1, L2, Ln) to the racing vehicles (V1, V2, Vn) allocated by the assignment means (3).

8. Method according to any of the preceding claims, wherein at least one operating parameter of the racetrack (1) is set by a track control device (6) based upon the vehicle data read-out from the vehicle memory (S1, S2, Sn) of a racing vehicle (V1, V2, Vn), wherein preferably an energy controller controlling the energy supply of the racing vehicles (V1, V2, Vn) on the racetrack (1) is set based upon the detected vehicle data.

9. Method according to any of the preceding claims, wherein at least one vehicle parameter of a racing vehicle (V1, V2, Vn) and/or one track parameter of the racetrack (1) is set based upon the participant data read-out from a participant memory (TS1, TS, TSn) and the assignment of this participant data to the vehicle data read-out from the vehicle memories (S1, S2, Sn) allocated by the assignment means (3), wherein in particular an energy controller controlling the energy supply of the racing vehicles (V1, V2, Vn) on the racetrack (1) is set based upon the said participant data and the assignment thereof, and/or a power controller controlling the power output of the racing vehicle (V1, V2, Vn) is set based upon the read-out participant data and the assignment thereof.

10. Method according to any of the preceding claims, wherein detection means on the racetrack (1) for detecting and/or monitoring the racing vehicles (V1, V2, Vn) are automatically configured, in particular adjusted in terms of response and adapted to the respective racing vehicles (V1, V2, Vn) dependent upon the vehicle data read-out from the vehicle memories (S1, S2, Sn).

11. Method according to any of the preceding claims, wherein a monitoring of the racetrack (1) is controlled by at least one camera (K1, K2, Kn) dependent upon the vehicle data read-out from the vehicle memories (S1, S2, Sn) and/or the effected assignment of the said vehicle data to the participant data read-out from the participant memories (Ts1, TS2, TSn).

12. Method according to the preceding claim, wherein the racetrack (1) is monitored by multiple cameras (K1, K2, Kn), wherein a switching, in particular the switching timepoints, between the different cameras (K1, K2, Kn) is controlled dependent upon the vehicle data read-out from the vehicle memories (S1, S2, Sn).

13. Method according to any of the preceding claims, wherein a racing start signal for indicating the beginning of racing is generated automatically by a start device is, on the basis of a comparison of the vehicle data read out from the vehicle memories (S1, S2, Sn) and the participant data read out from the participant memories (TS1, TS2, TSn) with the assignment - generated by the computer (3) - of the vehicle data to the participant data and/or the assignment of the vehicle data to the lanes (L1, L2, Ln) of the racetrack (1), it has been ascertained that the actual positioning of the participant memories (TS1, TS2, TSn) at the controllers (C1, C2, Cn) of the racing vehicles (V1, V2, Vn) and/or the actual disposition of the racing vehicles (V1, V2, Vn) on the lanes (L1, L2, Ln) corresponds to the respective computer-generated assignment.

14. Device for controlling and/or monitoring a plurality of racing vehicles (V1, V2, Vn) controlled by racing participants (T1, T2, Tn) on a racetrack (1), comprising vehicle memories (S1, S2, Sn) which are respectively assigned to the racing vehicles (V1, V2, Vn) and in which vehicle data are stored, and comprising at least one reader (R1, R2, Rn) assigned to the racetrack and serving for reading out the vehicle data stored in the vehicle memories (S1, S2, Sn) at the racetrack (1), and comprising a database (2) for storing the vehicle data read out by the reader (R1, R2, Rn), wherein participant memories (TS1, TS2, TSn) separate from the vehicle memories (S1, S2, Sn) are assigned to the racing participants (T1, T2, Tn), in which participant memories (TS1, TS2, TSn) participant data are stored, which can be read out by said or a further reader (P1, P2, Pn) and can be stored in the and/or a further database (2), wherein assignment means for assigning the vehicle data and participant data stored in the database or databases are provided, and wherein verification means for checking as to whether the assignment of the anew read-out data matches the assignment of vehicle- and participant data previously allocated by the assignment means (3), wherein each racing vehicle (V1, V2, Vn) is assigned a controller (C1, C2, Cn) for controlling the vehicle, and **characterized in that** the device comprises an activation device (5) and **in that** each controller (C1, C2, Cn) is provided with or connectable with a receiver/reader (P1, P2, Pn) for reading-out the participant data from the participant memories (TS1, TS2, TSn), wherein the participant data of only the participant memory (TS1, TS2, TSn) of the participant situated at the controller (C1, C2, Cn) are read-out by the respective receiver/reader (P1, P2, Pn), and the controller (C1, C2, Cn) and/or the respective racing vehicle (V1, V2, Vn) is only activated by the activation device (5) in the event that the participant data read-in on the respective controller (C1, C2, Cn) match the assignment of vehicle data and participant data determined by the assignment means (3).

15. Device according to the preceding claim, wherein at least one sensor unit (20) arranged in a manner recessed beneath the raceway surface is provided, said at least one sensor unit being mounted on a guide element (21), which can be slid transversely with respect to the raceway (22) from the lateral raceway edge (23) into a receptacle space (24) beneath the raceway (22), wherein the guide element (21) and/or the receptacle space (24) preferably have/has sliding guide means (25) for lateral guidance and/or positioning transversely with respect to the slide-in direction of the guide element (21) into the receptacle space (24).

16. Device according to the preceding claim, wherein a plurality of sensor units (20) are mounted at a predetermined distance from one another on the guide element (21), wherein said distance between the sensor units (20) corresponds to the division of the raceway (22) into lanes (L1, L2, Ln) and/or the distance between sensor windows (29) provided in the raceway (22), wherein the plurality of sensor units is preferably mounted on a common printed circuit board, which forms at least one part of the guide element and/or is rigidly fixed to the guide element (21).

## Revendications

1. Procédé de commande et/ou de surveillance de plusieurs voitures de course (V1, V2, Vn) commandées par des participants à la course (T1, T2, Tn) sur une piste de course, chaque voiture de course (V1, V2, Vn) étant respectivement prévue d'une mémoire de voiture (S1, S2, Sn), dans laquelle des données de voiture sont enregistrées, lesdites données de voiture étant extraites par un appareil de réception/lecture (R1, R2, Rn) associé à la piste de course (1) et enregistrées dans une base de données (2), chaque participant à la course étant prévu d'une mémoire de participant (TS1, TS2, TSn), dans laquelle des données de participant sont enregistrées, séparée de la mémoire de voiture (S1, S2, Sn), les données de participant étant extraites par ledit ou un autre appareil de réception/lecture (P1, P2, Pn) et stockées dans la et/ou dans une autre base de données (2), et les données de voiture et données de participant enregistrées dans la ou les base(s) de données étant associées les unes aux autres à l'aide de moyens d'association (3), une nouvelle extraction de données de voiture et de données de participant étant effectuée et une vérification de la concordance entre l'association des données extraites une nouvelle fois et l'association des données de voiture et données de participant attribuée auparavant par les moyens d'association (3) s'opérant, un appareil de commande (C1, C2, Cn) étant associé à chaque voiture de course (V1, V2, Vn) pour la commande de la voiture, et **caractérisé en ce que** chaque appareil de commande (C1, C2, Cn) est prévue d'un ou peut être raccordé à un appareil de réception/lecture (P1, P2, Pn) destiné à l'extraction des données de participant des mémoires de participant (TS1, TS2, TSn), les données de participant uniquement de la mémoire de participant (TS1, TS2, TSn) du participant présent sur l'appareil de commande (C1, C2, Cn) étant extraites par l'appareil de réception/lecture (P1, P2, Pn) respectif et l'appareil de commande (C1, C2, Cn) et/ou la voiture de course (V1, V2, Vn) respective étant activé(e)(s) par un dispositif d'activation (5) uniquement quand les données de participant lues depuis l'appareil de commande (C1, C2, Cn) respectif correspondent à l'association des données de voiture et des données de participant déterminée par les moyens d'association (3).

2. Procédé selon la revendication précédente, dans lequel des éléments RFID sont respectivement utilisés comme mémoire de voiture (S1, S2, Sn) et/ou comme mémoire de participant (TS1, TS2, TSn) et un appareil de lecture RFID est utilisé comme appareil de réception/lecture (R1, R2, Rn ; P1, P2, Pn).

3. Procédé selon la revendication 1, dans lequel des éléments à code-barres sont respectivement utilisés comme mémoire de voiture (S1, S2, Sn) et/ou comme mémoire de participant (TS1, TS2, TSn) et un appareil de lecture de code-barres est utilisé comme appareil de réception/lecture (R1, R2, Rn ; P1, P2, Pn).

4. Procédé selon l'une des revendications précédentes, dans lequel l'association des données de voiture aux données de participant est effectuée automatiquement au moyen d'un générateur aléatoire (RNG) et l'association des données de voiture aux données de participant est affichée sur un affichage (4) avant le début d'une course.

5. Procédé selon l'une des revendications précédentes, dans lequel, en cas de présence de plusieurs voies (L1, L2, Ln), chaque voie est munie d'un appareil de réception/lecture (R1, R2, Rn) pour la lecture des données de voiture dans une mémoire de voiture (S1, S2, Sn), les données de voiture uniquement de la voiture de course (V1, V2, Vn) présente sur la voie (L1, L2, Ln) respective étant extraites par l'appareil de réception/lecture (R1, R2, Rn) respectif.

6. Procédé selon la revendication précédente, dans lequel une association des données de voiture enregistrées dans la base de données (2) aux voies (L1, L2, Ln) est effectuée automatiquement par un générateur aléatoire et l'association des voies (L1, L2, Ln) aux données de voiture et/ou aux données de participant est affichée sur le moyen d'affichage (4) avant le début d'une course.

7. Procédé selon la revendication précédente, dans lequel la voiture de course (V1, V2, Vn) respective et/ou la voie (L1, L2, Ln) respective est activée par le ou par un autre dispositif d'activation (5) uniquement quand les données de voiture lues par l'appareil de lecture (R1, R2, Rn) présent sur une voie (L1, L2, Ln) correspondent à l'association des voies (L1, L2, Ln) aux voitures de course (V1, V2, Vn) spécifiée par les moyens d'association (3).

8. Procédé selon l'une des revendications précédentes, dans lequel au moins un paramètre de fonctionnement de la piste de course (1) est réglé par un dispositif de commande de piste (6) à l'aide des données de voiture extraites de la mémoire de voiture (S1, S2, Sn) d'une voiture de course (V1, V2, Vn), un régulateur d'énergie qui commande l'alimentation en énergie des voitures de course (V1, V2, Vn) sur la piste de course (1) étant de préférence réglé à l'aide des données de voiture acquises.

9. Procédé selon l'une des revendications précédentes, dans lequel au moins un paramètre de voiture d'une voiture de course (V1, V2, Vn) et/ou un paramètre de piste de la piste de course (1) est réglé à l'aide des données de participant extraites d'une mémoire de participant (TS1, TS2, TSn) et de l'association de ces données de participant aux données de voiture extraites des mémoires de voiture (S1, S2, Sn) effectuée par les moyens d'association (3), un régulateur d'énergie qui commande l'alimentation en énergie des voitures de course (V1, V2, Vn) sur la piste de course (1) étant en particulier réglé à l'aide desdites données de participant et de leur association et/ou un régulateur de puissance qui commande la puissance de sortie de la voiture de course (V1, V1, Vn) étant réglé à l'aide des données de participant extraites et de leur association.

10. Procédé selon l'une des revendications précédentes, dans lequel des moyens de détection sur la piste de course (1) destinés à la détection et/ou à la surveillance des voitures de course (V1, V2, Vn) sont automatiquement configurés, en particulier réglés en ce qui concerne leur réactivité et adaptés aux voitures de course (V1, V2, Vn) respectives, en fonction des données de voiture extraites des mémoires de voiture (S1, S2, Sn).

11. Procédé selon l'une des revendications précédentes, dans lequel une surveillance de la piste de course (1) est commandée par au moins une caméra (K1, K2, Kn) en fonction des données de voitures extraites des mémoires de voiture (S1, S2, Sn) et/ou de l'association effectuée desdites données de voiture aux données de participant extraites des mémoires de participant (TS1, TS2, TSn).

12. Procédé selon la revendication précédente, dans lequel la piste de course (1) est surveillée par plusieurs caméras (K1, K2, Kn), une commutation, en particulier les moments de commutation, entre les différentes caméras (K1, K2, Kn) étant commandée en fonction des données de voiture extraites des mémoires de voiture (S1, S2, Sn).

13. Procédé selon l'une des revendications précédentes, dans lequel un signal de départ de course destiné à indiquer le début de la course est généré automatiquement par un dispositif de départ quand il a été constaté, à l'aide d'une comparaison des données de voiture extraites des mémoires de voiture (S1, S2, Sn) et des données de participant extraites des mémoires de participant (TS1, TS2, TSn) avec l'association générée par l'ordinateur (3) des données de voitures aux données de participant et/ou l'association des données de voiture aux voies (L1, L2, Ln) de la piste de course (1), que le positionnement réel des mémoires de participant (TS1, TS2, TSn) sur les appareils de commande (C1, C2, Cn) des voitures de course (V1, V2, Vn) et/ou le placement réel des voitures de course (V1, V2, Vn) sur les voies (L1, L2, Ln) correspondent à l'association respective générée par ordinateur.

14. Dispositif de commande et/ou de surveillance de plusieurs voitures de course (V1, V2, Vn) commandées par des participants à la course (T1, T2, Tn) sur une piste de course (1), comprenant des mémoires de voiture (S1, S2, Sn) associées respectivement aux voitures de course (V1, V2, Vn), dans lesquelles des données de voiture sont enregistrées, et au moins un appareil de lecture (R1, R2, Rn) associé à la piste de course, destiné à l'extraction des données de voiture enregistrées dans les mémoires de voiture (S1, S2, Sn) sur la piste de course (1), et comprenant une base de données (2) destinée à l'enregistrement des données de voiture extraites par l'appareil de lecture (R1, R2, Rn), des mémoires de participant (TS1, TS2, TSn) séparées des mémoires de voiture (S1, S2, Sn) étant associées aux participants à la course (T1, T2, Tn), mémoires de participant dans lesquelles sont enregistrées des données de participant, qui peuvent être extraites par ledit ou un autre appareil de lecture (P1, P2, Pn) et stockées dans la et/ou dans une autre base de données (2), des moyens d'association étant prévus pour associer les données de voiture et données de participant enregistrées dans la ou les base(s) de données et des moyens de vérification étant prévus pour vérifier la concordance entre l'association des données extraites une nouvelle fois et l'association des données de voiture et données de participant attribuée auparavant par les moyens d'association (3), un appareil de commande (C1, C2, Cn) étant associé à chaque voiture de course (V1, V2, Vn) pour la commande de la voiture, et **caractérisé en ce que** le dispositif comprend un dispositif d'autorisation (5) et **en ce que** chaque appareil de commande (C1, C2, Cn) est muni d'un ou peut être raccordé à un appareil de réception/lecture (P1, P2, Pn) destiné à l'extraction des données de participant des mémoires de participant (TS1, TS2, TSn), les données de participant uniquement de la mémoire de participant (TS1, TS2, TSn) du participant présent sur l'appareil de commande (C1, C2, Cn) étant extraites par l'appareil de réception/lecture (P1, P2, Pn) respectif et l'appareil de commande (C1, C2, Cn) et/ou la voiture de course (V1, V2, Vn) respective étant activé(e)(s) par le dispositif d'activation (5) uniquement quand les données de participant lues sur l'appareil de commande (C1, C2, Cn) respectif correspondent à l'association des données de voiture et des données de participant déterminée par les moyens d'association (3).

15. Dispositif selon la revendication précédente, dans lequel au moins une unité de capteurs (20) disposée enfoncée sous la surface de la piste de circulation est prévue, qui est montée sur un élément de guidage (21), qui peut être inséré transversalement à la piste de circulation (22) par le bord de piste de circulation (23) latéral dans un espace de réception (24) sous la piste de circulation (22), l'élément de guidage (21) et/ou l'espace de réception (24) présentant de préférence des moyens de guidage d'insertion (25) pour le guidage latéral et/ou le positionnement transversalement au sens d'insertion de l'élément de guidage (21) dans l'espace de réception (24).

16. Dispositif selon la revendication précédente, dans lequel plusieurs unités de capteurs (20) sont montées sur l'élément de guidage (21) à une distance prédéfinie les unes des autres, ladite distance entre les unités de capteurs (20) correspondant à la division de la piste de circulation (22) en voies (L1, L2, Ln) et/ou à la distance entre des fenêtres de capteur (29) prévues dans la piste de circulation (22), les plusieurs unités de capteurs (29) étant de préférence montées sur une carte de circuits imprimés commune, qui forme au moins une partie de l'élément de guidage et/ou qui est fixée de manière rigide sur l'élément de guidage (21).
